# EUROPÄISCHE PATENTANMELDUNG

(11) **EP 1 217 262 A2**
(43) Veröffentlichungstag der Anmeldung: **26.06.2002**
(21) Anmeldenummer: 01128015.3
(22) Anmeldetag: 24.11.2001
(51) Int. Cl.: F16H 57/08

(54) **Planetenträger für Getriebe, insbesondere Automatikgetriebe oder Lastschaltgetriebe**

(30) Priorität: 23.12.2000 DE 10064917
(71) Anmelder: INA Wälzlager Schaeffler oHG, 91074 Herzogenaurach (DE)
(72) Erfinder: Schwuger, Josef, 91315 Höchstadt/Aisch (DE); Straub, Frank, 97618 Hohenroth (DE); Kick-Rodenbücher, Reinhard, 90455 Nürnberg (DE)

(57) **Zusammenfassung**

Die Erfindung betrifft einen Planetenträger (1) für Getriebe, insbesondere Automatikgetriebe, Lastschaltgetriebe und dergleichen, mit einem Tragflansch (4), der zumindest teilweise doppelwandig zur Aufnahme von Planetenrädern ausgeführt ist und mit zumindest einem Stützzylinder (2, 2a, 2b, 3, 3a, 3b), der mit einem Zahnprofil zur Drehmomentabstützung von Kupplungs- oder Bremslamellen ausgerüstet ist.

Erfindungsgemäß ist der Planetenträger (1) aus mehreren Einzelteilen (2, 2a, 2b, 3, 3a, 3b, 5, 6, 6a, 6b und 11) hergestellt, die formschlüssig miteinander verbunden sind.

## Beschreibung

### Gebiet der Erfindung

Die Erfindung bezieht sich auf einen Planetenträger für Getriebe, insbesondere selbsttätig gesteuerte Schaltgetriebe, wie Automatikgetriebe, Lastschaltgetriebe und dergleichen, mit einem Tragflansch, der zumindest teilweise doppelwandig zur Aufnahme von Planetenrädern ausgeführt ist und mit zumindest einem Stützzylinder, der mit einem Zahnprofil zur Drehmomentabstützung von Kupplungs- oder Bremslamellen ausgerüstet ist.

### Hintergrund der Erfindung

Aus der gattungsbildenden deutschen Patentanmeldung DE 196 48 124 A1 ist ein Planetenträger bekannt, der aus Druckguss-Aluminium hergestellt ist. Dabei ist der Planetenträger zweiteilig aufgebaut, wobei der Stützzylinder mit einem Flansch aus Druckguss-Aluminium herstellt ist und der Tragflansch, dort "Carrier" genannt, zur Aufnahme der Planetenträger ebenfalls aus Druckguss-Aluminium hergestellt und mit dem Stützzylinder verschraubt ist. Dadurch mögen zwar, wie dort angestrebt, die beiden Teile kostengünstig herstellbar sein, sie müssen aber bearbeitet und miteinander verschraubt werden, um einen kompletten Planetenträger darzustellen. Weiterhin besteht das Problem, dass Druckguss-Aluminium, insbesondere für den Bereich des Zahnprofils für die Kupplungs- oder Bremslamellen nur begrenzte Festigkeit hat und auch weitere Bauteile, wie z.B. Scheiben/Buchsen bei den Anlaufflächen der Lagerung erforderlich sind. Darüber hinaus ist auch der Bauraum verhältnismäßig groß, weil bei dem Druckguss-Aluminium-Material eine bestimmte Wandstärke aus Festigkeitsgründen nicht unterschritten werden kann.

Weiterhin ist es bekannt, europäische Patentanmeldung EP 0 639 415 A2, einen rotationssymmetrischen Körper, insbesondere Lamellenträger einstückig als kaltverformtes Tiefzieh- und/oder Fließdruckteil herzustellen. Es handelt sich dabei aber nur um ein einfaches rotationssymmetrisches Bauteil mit einer im wesentlichen topfförmigen Ausgestaltung.

### Aufgabe der Erfindung

Aufgabe der Erfindung ist es, die Nachteile der bekannten Lösungen zu vermeiden und einen Planetenträger zu schaffen, der mit geringen Kosten herstellbar ist, ein geringes Bauvolumen hat und hohe Belastbarkeit bzw. Festigkeit aufweist. Die Festigkeit soll dabei so hoch sein, dass keine zusätzlichen Bauteile, wie Scheiben, Buchsen usw. erforderlich sind. Darüber hinaus soll es möglich sein, für die bestimmten Bereich des Planetenträgers optimale auch unterschiedliche Werkstoffeigenschaften zur Verfügung zu stellen.

### Zusammenfassung der Erfindung

Die Aufgabe der Erfindung wird dadurch gelöst, dass der Planetenträger aus mehreren Einzelteilen hergestellt ist, die formschlüssig miteinander verbunden sind. Dadurch ist es möglich, für die verschiedenen Einzelteile verschiedene, optimale Werkzeugqualitäten zur Verfügung zu stellen. Darüber hinaus lassen sich derartige Einzelteile viel einfacher und kostengünstiger herstellen, wobei in besonders vorteilhafter Weise die Einzelteile aus Stahl umformtechnisch hergestellt, d.h. vorzugsweise durch Kaltverformung mittels Vorziehen bzw. Tiefziehen und Abstrecken sowie ggf. Fließdrücken hergestellt sind. Die so hergestellten Einzelteile können gemäß einer weiteren vorteilhaften Ausgestaltung der Erfindung miteinander verschweißt werden. Bevorzugte Materialien sind 16MnCr5; C45; 80Cr2. Durch diese Ausgestaltung können Anlaufflächen oder Lagerstellen direkt vom Planetenträger ohne zusätzliche Scheiben/Buchsen und dergleichen übernommen werden. Weiterhin können durch die Einzelherstellung die Oberflächen bei Bedarf gezielt einer Oberflächenbehandlung unterzogen werden, z.B. Härten, Nitrovarborieren oder Nitrieren oder Verfestigen durch Kugelstrahlen oder Sandstrahlen.

Weitere Ausgestaltungen der Erfindung sind Gegenstand der Unteransprüche 4 bis 12.

Um die Einzelteile gegeneinander abzustützen oder formschlüssig miteinander zu verbinden, weisen diese, je nach ihrer Ausgestaltung, Anschläge, Vorsprünge, Nasen, Schultern, Ausnehmungen und dergleichen auf.

Diese Anschläge, Vorsprünge, Nasen und dergleichen dienen auch zum gegenseitigen Fixieren vor und/oder während des Schweißens.

Die Stützzylinder können als spanlos hergestellte zylindrische Umformteile oder aus gebogenem Streifenmaterial mit aneinander befestigten Enden hergestellt werden. Dadurch ist es möglich, die Teile, auf denen die Kupplungsoder Bremslamellen sitzen, kostengünstig und aus einem solchen Werkstoff herzustellen, der die geforderten Festigkeitsanforderungen und den Verschleißwiderstand gewährleistet.

Der Tragflansch, an dem im fertigen Zustand die Stützzylinder befestigt sind, ist vorzugsweise aus zumindest zwei Teilen aufgebaut.

In einer ersten Ausgestaltung kann der Tragflansch ein im wesentlichen topfförmiges und ein im wesentlichen scheibenförmiges Bauteil aufweisen, die miteinander verbunden sind und an denen dann die Stützzylinder befestigt werden.

In einer weiteren Ausgestaltung weist der Tragflansch im wesentlichen zwei scheibenförmige Bauteile auf, die mittels Abstandshalter gegeneinander gehalten sind und dadurch aneinander befestigt werden. Vorzugsweise sind die Abstandshalter an einem der Stützzylinder angeformt, durchdringen eines der scheibenförmigen Baueile und reichen bis zum zweiten scheibenförmigen Bauteil. Vorzugsweise hat dann der Stützzylinder, an dem keine Abstandshalter angeformt sind, Anschläge, mit denen dieser an einem der scheibenförmigen Bauteile fixiert werden kann.

In einer weiteren Ausgestaltung weist der Tragflansch ein im wesentlichen zylindrisches Bauteil mit Ausnehmungen für die Planetenträger auf, wobei dann an den Stützzylindern scheibenförmige Bereiche angeformt sind, die zusammen mit dem zylindrischen Bauteil den Tragflansch bilden. Vorzugsweise weist dann das zylindrische Bauteil Radialflansche, Anschläge und Vorsprünge zur Fixierung der Stützzylinder oder der scheibenförmigen Bereiche der Stützzylinder an dem zylindrischen Bauteil auf.

### Kurze Beschreibung der Zeichnung

Es zeigen:
- Figur 1: eine perspektivische Darstellung eines Planetenträgers,
- Figur 1a: eine explosionsartige Darstellung der Bauteile, aus denen der Planetenträger nach Figur 1 hergestellt ist,
- Figur 2: eine perspektivische Darstellung eines Planetenträgers in gegenüber Figur 1 modifizierter Ausgestaltung,
- Figur 2a: eine Explosionsdarstellung der Bauteile aus denen der Planetenträger nach Figur 2 hergestellt ist,
- Figur 3: eine perspektivische Darstellung eines weiteren Planetenträgers und
- Figur 3a: eine Explosionsdarstellung der Bauteile aus denen der Planetenträger nach Figur 3 hergestellt ist.

### Ausführliche Beschreibung der Zeichnung

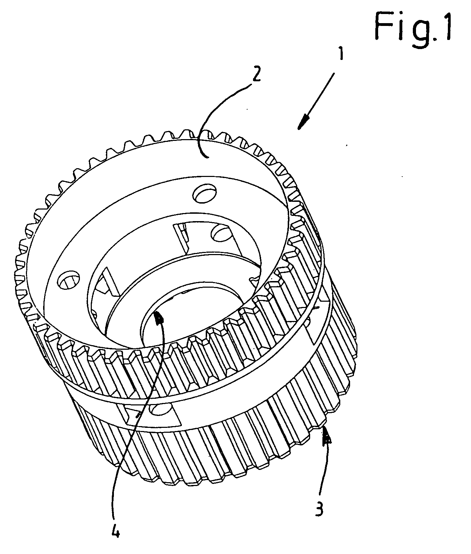

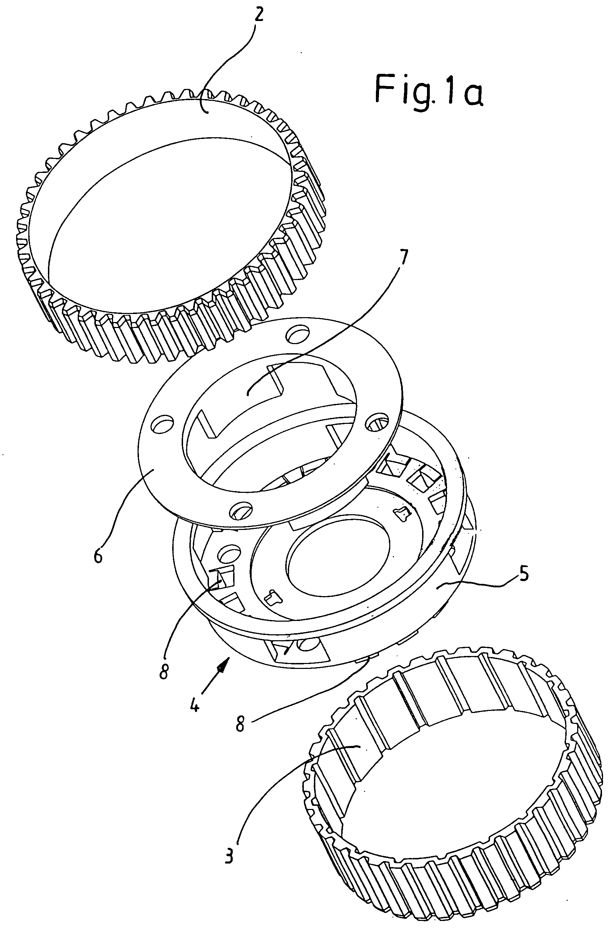

In den Figuren 1 bis 3a sind, soweit im einzelnen dargestellt, mit 1 ein Planetenträger bezeichnet, der Stützzylinder 2 und 3 sowie einen Tragflansch 4 aufweist. Der Tragflansch 4 ist doppelwandig aufgebaut und weist Ausnehmungen und zylindrische Öffnungen zur Aufnahme nicht dargestellter Planetenräder und deren Achsen oder Wellen auf.

Wie weiterhin Figur 1a zu entnehmen ist, sind die Stützzylinder 2 und 3 ringförmig ausgebildet, wobei der Tragflansch 4 aus einem topfförmigen Bauteil 5 und einem scheibenförmigen Bauteil 6 aufgebaut ist. An dem scheibenförmigen Bauteil 6 sind Vorsprünge 7 angeformt, die bis zum scheibenförmigen Bereich des topfförmigen Bauteils 5 reichen und einen stabilen Tragflansch bilden. Am scheibenförmigen Bereich des topfförmigen Bauteils 5 sind weiterhin Schultern 8 angeformt, die zur Führung des Stützzylinders 3 dienen. Das topfförmige Bauteil 5 und das scheibenförmige Bauteil 6 haben dabei eine solche radiale Erstreckung, dass eine hinreichende Befestigungsfläche für die Stützzylinder gegeben ist und für die Kupplungs- oder Bremslamellen Anschlagflächen entstehen.

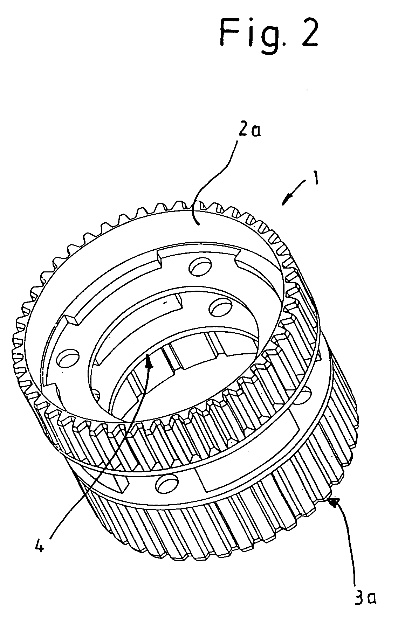

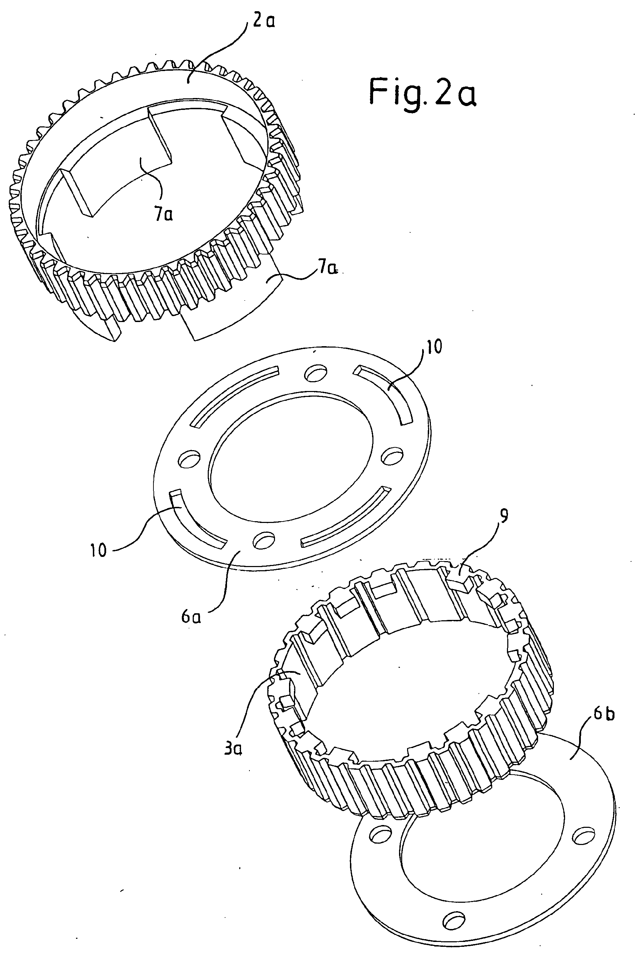

Der Planetenträger 1 nach den Figuren 2 und 2a weist modifizierte Stützzylinder 2a und 3a auf, wobei der Stützzylinder 2a zusätzlich zu der Ringform Vorsprünge 7a aufweist und am Stützzylinder 3a Anschläge 9 angeformt sind. Der Tragflansch 4 gemäß den Figuren 2 und 2a weist im wesentlichen zwei scheibenförmige Bauteile 6a und 6b auf, wobei am scheibenförmigen Bauteil 6a Öffnungen 10 für die Vorsprünge 7a vorgesehen sind, so dass im zusammengebauten Zustand diese bis zu dem scheibenförmigen Bauteil 6b reichen.

Eine zusätzliche Stütze erfährt der Planetenträger 1 nach den Figuren 2 und 2a durch die Anschläge 9 am Stützzylinder 3a. Die scheibenförmigen Bauteile 6a und 6b sind auch hier so groß, dass die Stützzylinder 2a und 2b eine ausreichende Befestigungsfläche und die Lamellen Anschlagflächen haben.

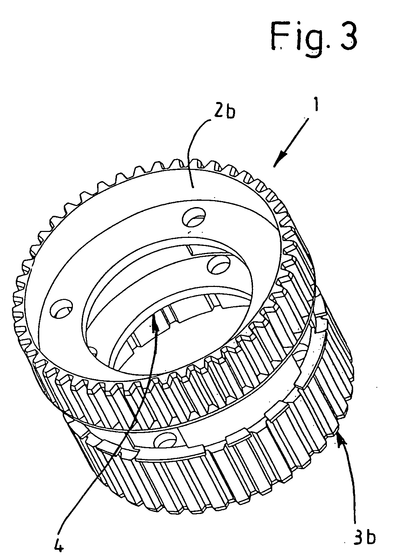

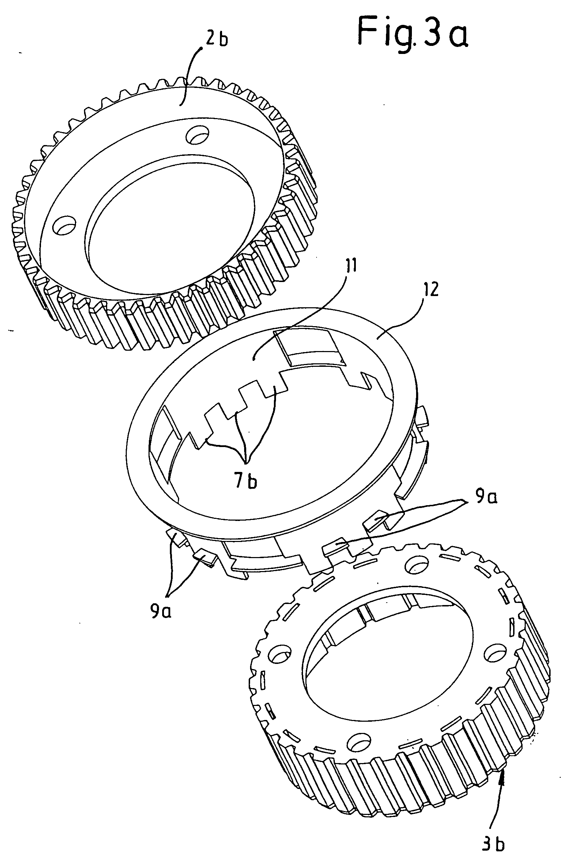

In dem Ausführungsbeispiel gemäß der Figuren 3 und 3a weisen die dort mit 2b und 3b bezeichneten Stützzylinder zusätzlich zu ihrem ringförmigen Teil scheibenförmige Bereiche auf, die die Öffnungen für die Achsen oder die Wellen der Planetenräder beinhalten und Teile des Tragflansches 4 bilden. Zwischen den Stützzylindern 2b und 3b ist ein zylindrisches Bauteil 11 vorgesehen, das Aussparungen für die Planetenräder aufweist. Das zylindrische Bauteil 11 weist einerseits einen Radialflansch 12 und andererseits Vorsprünge 7b auf, zu den der scheibenförmige Bereich des Stützzylinders 3b passende Öffnungen aufweist. Weiterhin sind in diesem Bereich des zylindrischen Bauteils 11 Anschläge 9a vorgesehen, die zur Fixierung des scheibenförmigen Teils des Stützzylinders 3b dienen. Auch hier sind hinreichende Befestigungsflächen und Anschlagflächen vorgesehen.

Durch die beispielhaften Ausgestaltungen der Erfindung wird ein Planetenträger zur Verfügung gestellt, der bei geringen Abmessungen hohe Festigkeit und gezielte Festigkeitsabstufungen an den gewünschten Bauteilen zur Verfügung stellt, der aber auch ohne zusätzliche Bauteile, wie Scheiben, Buchsen und dergleichen auskommt.

### Bezugszahlenliste

- 1: Planetenträger
- 2: Stützzylinder
- 2a: Stützzylinder
- 2b: Stützzylinder
- 3: Stützzylinder
- 3a: Stützzylinder
- 3b: Stützzylinder
- 4: Tragflansch
- 5: topfförmiges Bauteil
- 6: scheibenförmiges Bauteil
- 6a: scheibenförmiges Bauteil
- 6b: scheibenförmiges Bauteil
- 7: Vorsprünge
- 7a: Vorsprünge
- 7b: Vorsprünge
- 8: Schultern
- 9: Anschläge
- 9a: Anschläge
- 10: Öffnungen
- 11: zylindrisches Bauteil
- 12: Radialflansch

## Patentansprüche

1. Planetenträger (1) für Getriebe, insbesondere selbsttätig gesteuerte Schaltgetriebe, wie Automatikgetriebe, Lastschaltgetriebe und dergleichen, mit einem Tragflansch (4), der zumindest teilweise doppelwandig zur Aufnahme von Planetenrädern ausgeführt ist und mit zumindest einem Stützzylinder (2, 2a, 2b, 3, 3a, 3b), der mit einem Zahnprofil zur Drehmomentabstützung von Kupplungs- oder Bremslamellen ausgerüstet ist, **dadurch gekennzeichnet, dass** der Planetenträger (1) aus mehreren Einzelteilen (2, 2a, 2b, 3, 3a, 3b, 5, 6, 6a, 6b und 11) herstellt ist, die formschlüssig miteinander verbunden sind.

2. Planetenträger für Getriebe nach Anspruch 1, **dadurch gekennzeichnet, dass** die Einzelteile (2, 2a, 2b, 3, 3a, 3b, 5, 6, 6a, 6b und 11) aus Stahl umformtechnisch herstellt sind.

3. Planetenträger für Getriebe nach einem der Ansprüche 1 oder 2, **dadurch gekennzeichnet, dass** die Einzelteile (2, 2a, 2b, 3, 3a, 3b, 5, 6, 6a, 6b und 11) miteinander verschweißt sind.

4. Planetenträger für Getriebe nach einem der vorhergehenden Ansprüche, **dadurch gekennzeichnet, dass** die Einzelteile (2, 2a, 2b, 3, 3a, 3b, 5, 6, 6a, 6b und 11) Anschläge (9, 9a), Vorsprünge (7, 7a, 7b), Nasen, Schultern (8), Ausnehmungen und dergleichen aufweisen, mittels denen die Einzelteile (2, 2a, 2b, 3, 3a, 3b, 5, 6, 6a, 6b und 11) gegeneinander abgestützt oder formschlüssig miteinander verbunden sind.

5. Planetenträger für Getriebe nach Anspruch 4, **dadurch gekennzeichnet, dass** die Anschläge (9, 9a), Vorsprünge (7, 7a, 7b), Nasen, Schultern (8), Ausnehmungen und dergleichen als Hilfsmittel zur Fixierung der Einzelteile (2, 2a, 2b, 3, 3a, 3b, 5, 6, 6a, 6b und 11) vor und/oder während des Schweißens ausgeführt sind.

6. Planetenträger für Getriebe nach einem der vorhergehenden Ansprüche, **dadurch gekennzeichnet, dass** die Stützzylinder (2, 2a, 2b, 3, 3a, 3b) als spanlos hergestellte zylindrische Umformteile oder aus gebogenem Streifenmaterial mit aneinander befestigten Enden hergestellt sind.

7. Planetenträger für Getriebe nach einem der vorhergehenden Ansprüche, **dadurch gekennzeichnet, dass** der Tragflansch (4) aus zumindest zwei Bauteilen (5 und 6, 6a und 6b) aufgebaut ist.

8. Planetenträger für Getriebe nach Anspruch 7, **dadurch gekennzeichnet, dass** der Tragflansch (4) ein im wesentlichen topfförmiges (5) und ein im wesentlichen scheibenförmiges Bauteil (6) aufweist, die miteinander verbunden ist.

9. Planetenträger für Getriebe nach Anspruch 7, **dadurch gekennzeichnet, dass** der Tragflansch (4) im wesentlichen zwei scheibenförmige Bauteile (6a und 6b) aufweist, die mittels Vorsprüngen (7a) zueinander gehalten sind.

10. Planetenträger für Getriebe nach Anspruch 9, **dadurch gekennzeichnet, dass** die Vorsprünge (7a) an einem der Stützzylinder (2a) angeformt sind, eine der scheibenförmigen Bauteile (6a) durchdringen und bis zum zweiten scheibenförmigen Bauteil (6b) reichen.

11. Planetenträger für Getriebe nach einem der vorhergehenden Ansprüche, **dadurch gekennzeichnet, dass** der Tragflansch (4) ein im wesentlichen zylindrisches Bauteil (11) mit Aussparungen für die Planetenräder aufweist und dass die Stützzylinder (2b und 3b) scheibenförmige Bereiche aufweisen, die zusammen mit dem zylindrischen Bauteil (11) den Tragflansch (4) bilden.

12. Planetenträger für Getriebe nach Anspruch 11, **dadurch gekennzeichnet, dass** das zylindrische Bauteil (11) einen Radialflansch (12), Anschläge (9a) und Vorsprünge (7b) zur Fixierung der Stützzylinder (2b und 3b) oder der scheibenförmigen Bereiche der Stützzylinder am zylindrischen Bauteil (11) aufweist.
